# EUROPÄISCHE PATENTSCHRIFT

(11) **EP 0 615 392 B1**
(45) Veröffentlichungstag und Bekanntmachung des Hinweises auf die Patenterteilung: **01.07.1998**
(21) Anmeldenummer: 94100323.8
(22) Anmeldetag: 12.01.1994
(51) Int. Cl.: H04Q 7/38, H04B 7/26

(54) **Verfahren und Vorrichtung zum ortsabhängiges Weiterreichen in Mobilfunknetzen**
Method and apparatus for location dependent handover in a mobile radio network
Méthode et appareil pour le transfert d'appel dans un réseau radio mobile dépendant de la localisation

(30) Priorität: 11.03.1993 DE 4307702
(43) Veröffentlichungstag der Anmeldung: 14.09.1994
(73) Patentinhaber: DETECON DEUTSCHE TELEPOST CONSULTING GmbH, 53175 Bonn (DE)
(72) Erfinder: Cheng, Hai, Dr.-Ing., D-5300 Bonn (DE); Rauch, Horst, Dipl.-Ing., D-5460 Linz (DE); Sänger, Georg, Dr. rer. nat., D-54460 Linz (DE)
(74) Vertreter: Riebling, Peter, Dr.-Ing.

(56) Entgegenhaltungen:
- EP-A- 0 199 266
- EP-A- 0 292 182
- WO-A-92/02104
- 41ST IEEE VEHICLUAR TECHNOLOGY CONFERENCE. GATEWAY TO THE FUTURE. TECHNOLOGY IN MOTION, 19. Mai 1991, ST. LOUIS, MO, US Seiten 505 - 510, XP000260230 O.GRIMLUND ET AL. 'HANDOFF STRATEGIES IN MICROCELLULAR SYSTEMS'

## Beschreibung

Es ist bekannt, daß bei zellularen Mobilfunknetzen die zu versorgende Fläche in Zellen unterteilt ist, wobei jede Zelle durch eine Feststation versorgt wird. Jeder Zelle werden eine oder mehrere Funkfreqeunzen zugeordnet, wobei abhängig vom gewählten Übertragungsverfahren jede Funkfrequenz entweder einen oder mehrere Informationskanäle haben kann. Bei den Informationskanälen handelt es sich um Signalisierungs- und Verkehrskanäle, wobei über die Verkehrskanäle eine Sprach- oder Datenübermittlung von und zu den MS (Mobilstationen) stattfindet. Wechselt nun eine MS während einer Verbindung die Zelle, so findet ein Handover-Verfahren statt, wobei im allgemeinen eine Umschaltung der Verbindung von der Feststation der Herkunftszelle auf die Feststation der Zielzelle erfolgt. Gleichzeitig wechselt die MS auch den für die Funkverbindung benutzten Funkkanal.

In Mobilfunknetzen besteht die Entscheidungsprozedur für ein Handover aus zwei Phasen. Die erste Phase ist die Meßphase, in der die MS unter anderem Messungen der Funkfeldstärke der eigenen Zelle und der Nachbarzellen durchführt. Ein Message-Generator, der sich in der MS befindet, erzeugt eine Message aus den von der MS gelieferten Meßdaten für den Measurement-Report, der dann in kurzen Zeitintervallen an die Feststation gesendet wird. Das Erkennen der Notwendigkeit eines Handovers erfolgt nun im Mobilfunknetz. In der zweiten Phase, nämlich der Entscheidungsphase, trifft das Mobilfunknetz, unter Zuhilfenahme der von der MS gelieferten Meßdaten, die Entscheidung über die Durchführung eines Handover-Verfahrens. Das Netz prüft dabei ständig, ob ein gemittelter Meßwert der empfangenen Funkfeldstärke und/oder der Empfangsqualität eine bestimmte Schwelle unterschreitet oder ob eine bessere Zelle verfügbar ist. Sind die Meßwerte nicht mehr ausreichend, wird intern im Mobilfunknetz die Durchführung eines Handover vorbereitet. Dabei wird geprüft ob Handover-Zielzellen verfügbar sind und welche Zelle aus funktechnischer Sicht die günstigste ist. Außerdem werden alle gemeldeten Zellen überprüft, ob sie das Kanalverfügbarkeits-Kriterium erfüllen. Danach wird eine Handover-Anforderung an die entsprechende interne Steuereinheit gesendet, die eine Liste der verfügbaren Nachbarzellen sowie den Handover-Grund enthält. Die Steuereinheit entscheidet über die Zielzelle und den Zeitpunkt des Handover-Verfahrens. Anschließend erhält die MS alle Informationen, die sie für die Kommunikation mit der neuen Zelle benötigt, einschließlich der genauen Kanalbeschreibung. Das Handover-Verfahren ist abgeschlossen, sobald die mit der MS verbundene Feststation bzw. deren zugeordnete Steuereinheit in der neuen Zelle ein "Handover Complete" signalisiert. Nur wenn die Zielzelle der MS einer Feststation der gleichen Steuereinheit zugeordnet ist wie die Herkunftszelle, kann die Steuereinheit das Handover-Verfahren autonom ausführen und muß das MSC (engl. Mobile Switching Center) lediglich davon unterrichten. Bei diesem ganzen Verfahren spielt die MS eine passive Rolle, weil sie das Handover-Verfahren von der Herkunftszelle in eine Zielzelle zu einem bestimmten Zeitpunkt nicht beeinflussen kann.

Dieses bekannte Verfahren ist z. B. im Bericht der "41ST IEEE VEHICLUAR TECHNOLOGY CONFERENCE, GATEWAY TO THE FUTURE, TECHNOLOGY IN MOTION, 19. Mai 1991, ST LOUIS, US S. 505 - 510; O.GRIMLUND ET AL.: 'HANDOFF STRATEGIES IN MICROCELLULAR SYSTEMS"' beschrieben.

Dieses Verfahren gemäß dem Stand der Technik hat den Nachteil, daß das Mobilfunknetz mehrere Handover-Verfahren innerhalb eines geringen Zeitraums einleiten muß, wenn sich mehrere MS gleichzeitig in dieselbe Zelle hinein bewegen. Die MS muß ständig und in sehr kurzen Zeitintervallen Meßdaten an das Mobilfunknetz übermitteln. Dadurch kommt es zu einer Signalisierungslast, die insbesondere bei hohem Verkehrsaufkommen zu einem Abbruch des Handover-Verfahrens führen kann und demzufolge auch zu einem Abbruch der Funkverbindung führt. Da der Signalisierungskanal für das Handover-Verfahren "gestohlene" Zeitschlitze des Verkehrskanals (sog. Inband-Signalisierung) benutzt, ist dadurch eine Unterbrechung der Nachrichtenübertragung in dem Verkehrs kanal unvermeidlich. Dies ist besonders störend, wenn der Verkehrskanal als Datenkanal benutzt wird.

Aus der WO-A-92/02104 bzw. der EP-A-0 292 182 sind cellulare Mobilfunksysteme bekannt, bei denen das Handover durch eine Positionsbestimmung der Mobilstation gesteuert wird. Durch eine dem Handover vorausgehende Bestimmung des Aufenthaltsortes der Mobilstation wird die Notwendigkeit für einen Handover erkannt und ein gezieltes Handover eingeleitet.

Der Erfindung liegt deshalb die Aufgabe zugrunde, für bestimmte entsprechend ausgerüstete MS ein Verfahren aufzuzeigen, das eine frühzeitige Signalisierung zwischen der MS und dem Mobilfunknetz und somit die gezielte Verteilung der Signalisierungslast ermöglicht. Dadurch wird für diese genannten MS ein implizierte Priorität im Vergleich zu den anderen gleichzeitig in die neue Zelle ankommenden MS erzielt. Außerdem besteht die Möglichkeit, den Kommunikationspartner schon vor der von der Inband-Signalisierung verursachten Unterbrechung zu unterrichten. In dem erfindungsgemäßen Verfahren übernimmt die MS eine aktive Rolle, da sie die Ziel zelle, in die das Handover stattfinden soll, selbst bestimmt.

Die Aufgabe wird durch die im kennzeichnenden Teil des Patentanspruchs 1 angegebenen Merkmale gelöst. Der Grundgedanke des erfindungsgemäßen Verfahrens liegt darin, daß die MS anhand einer eigenen Datenbank und der Ortsinformation, die von dem auf der MS-Fahrstrecke und kurz vor der statischen und definierten Zellgrenze eingebauten Ortsinformations-Generator an die MS abgesendet wurde, die Meßdaten zu einem bestimmten Zeitpunkt derart erzeugt, daß das Mobilfunknetz ein Handover in die von der MS gewünschten Zelle innerhalb eines kurzen Zeitraums entscheiden kann und muß.

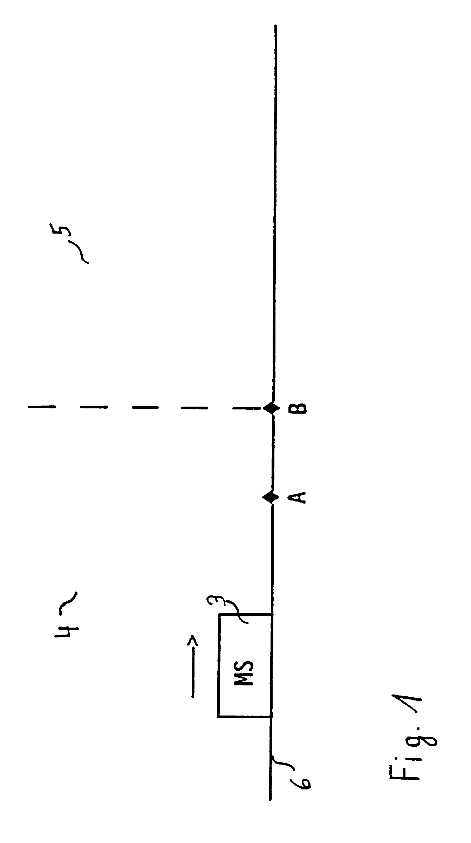

Ein Beispiel für die Anwendung des Erfindungsgedankens wird im folgenden aufgeführt. Anhand der beiden Zeichnungen wird der Ablauf des ortsabhängigen Handover-Verfahrens erläutert. **Figur 1** zeigt die Lokalisierung des auf der MS-Fahrstrecke befindlichen ortsfesten Ortsinformations-Generators, wobei der Punkt B die statische und definierte Zellgrenze darstellt und Punkt A die Stelle bezeichnet, an der sich der Ortsinformations-Generator befindet. Die Entscheidungsprozedur des ortsabhängigen Handover-Verfahrens besteht nun aus 3 Signalisierungsphasen.
In der ersten Phase erreicht die MS **(3)** den Punkt, wo sich der Ortsinformations-Generator befindet. Wenn die MS an dem Ortsinformations-Generator, der auf der MS-Fahrstrecke **(6)** und kurz vor der Zellgrenze zwischen der Herkunftszelle **(4)** und der Zielzelle **(5)** liegt, vorbeifährt, sendet dieser die Ortsinformationen an die MS, daß sich in definiertem Abstand eine statische Zellgrenze befindet. Der Ortsinformations-Empfänger, der sich in der MS befindet, nimmt das Ausgangssignal aus dem Ortsinformations-Generator auf und leitet es an den Kontroller weiter, der sich ebenfalls in der MS befindet. Außerdem ist die MS mit einer Datenbank ausgestattet, in der alle notwendigen Zellnummern, das vorgegebene Datentelegramm, das ggf. zur Benachrichtigung des Kommunikationspartners über ein Übertragungsunterbrechung abgesendet wird, und die Informationselemente, die zur Manipulation der Meßdaten verwendet werden, gespeichert sind.

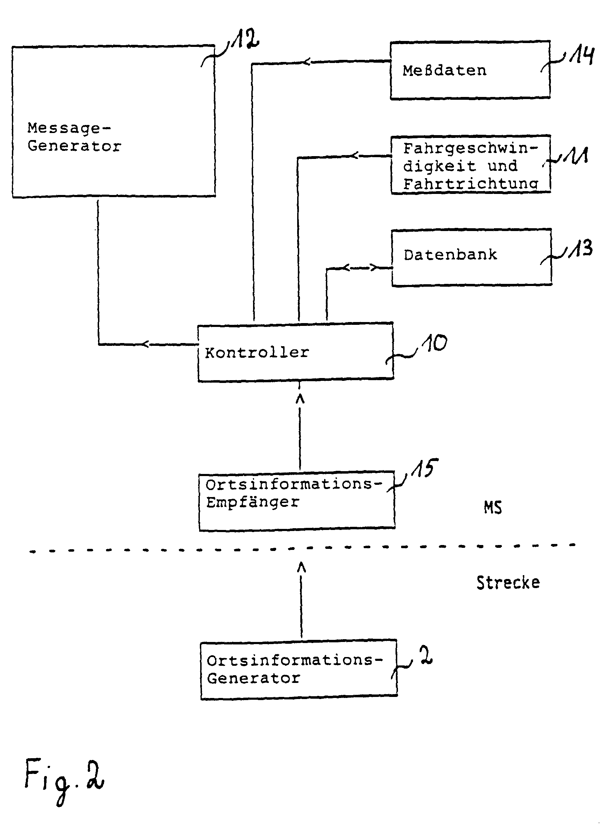

**Figur 2** erläutert den Ablauf des Verfahrens in der zweiten Phase. In dieser überprüft die MS, ob sie wirklich in eine neue Zelle hineinfährt. In dieser Phase findet ein reger Informationsaustausch zwischen dem Kontroller **(10)** und der Datenbank **(13)** statt, wobei der Kontroller die für ihn wichtigen Daten aus der MS- eigenen Datenbank **(13)** erhält.
Der Kontroller trifft die Entscheidung, ob der Message-Generator **(12)** im normalen Betrieb weiterarbeitet oder ob er auf den Sonderbetrieb umgestellt werden muß. Im normalen Betrieb erzeugt der Message-Generator aus den von der MS gelieferten Meßdaten **(14)** die Message für den Measurement-Report. Im Sonderbetrieb sendet der Message-Generator ggf. zuerst eine vorgegebene Message an den Kommunikationspartner, um ihn über eine bevorstehende handoverbedingte Unterbrechung zu informieren und erzeugt dann anhand der Datenbank die erwünschte Message.

Erhält der Kontroller über den Ortsinformations-Empfänger **(15)** das Ausgangssignal des Ortsinformations-Generators **(2)**, entscheidet der Kontroller anhand der MS-Fahrgeschwindigkeit und Fartrichtung **(11)**, ob die MS tatsächlich in die neue Zelle hineinfährt und damit auch, ob der Message-Generator in den Sonderbetrieb umgeschaltet werden muß. Der Kontroller ist dabei in der Lage, die Zellnummer je nach dem MS-Fahrweg einzuordnen. Der Kontroller ist mit einem Timer ausgestattet, der ersteren zwingt, nach Ablauf eines bestimmten Timeout-Wertes den Message-Generator wieder in den normalen Betrieb zurückzuschalten, wobei der normale Betrieb das Handover außerhalb der geplanten Zellgrenzen ermöglicht.

Hat die MS die Überprüfung, ob sie wirklich in eine neue Zelle hineinfährt, als positiv ermittelt, bestimmt sie selbst, welche Zelle als Zielzelle für das Handover ausgewählt wird. Danach wird die MS durch die von ihr simulierten Meßdaten, der Herkunftszelle mitteilen, daß die ausgesuchte Zielzelle der einzige und beste Kandidat für ein Handover ist.
In der dritten Phase kann und muß das Mobilfunknetz aus den von der MS gelieferten Meßdaten ein Handover zwischen der Herkunftszelle und der angegebenen Zielzelle entscheiden. Somit ist eine gezielte Handover-Entscheidung beendet.

Zur Realisierung der oben beschriebenen Handover-Prozedur in der Mobilstation sind grundsätzlich softwaremäßige Änderungen nötig. Im Mobilfunknetz werden keine Änderungen vorgenommen. Durch zwei Betriebsarten - den normalen Betrieb und den Sonderbetrieb - in dem Message-Generator ist es möglich, daß die MS sowohl auf den geplanten Strecken als auch in den übrigen Versorgungsgebieten des Mobilfunknetzes das Handover-Verfahren durchführen kann.

Das im Beispiel beschriebene spezielle Handover-Verfahren unter Zuhilfenahme der Ortsinformationen läßt sich prinzipiell im gesamten Mobilfunknetz anwenden, bevorzugte Anwendung wird an Verkehrswegen und hier besonders an solchen mit sich schnell bewegenden Mobilstationen gesehen.

## Patentansprüche

1. Verfahren zur Durchführung eines ortsabhängigen Handover in einem Mobilfunknetz, welches aus einer Vielzahl von Funkfeststationen besteht, die eine Vielzahl von Funkzellen versorgen, wobei in dem Mobilfunknetz Mobilstationen mittels einer Funkverbindung mit einer der jeweiligen Funkzelle zugeordneten Funkfeststation verbunden sind, wobei während der Funkverbindung in der Mobilstation Messungen von Empfangsparametern durchgeführt werden und die Messwerte in Form von Messages an das Mobilfunknetz übermittelt werden und beim Erreichen bestimmter Werte der Parameter ein Wechsel der Funkverbindung von einer Funkzelle zu einer anderen durchgeführt wird, **dadurch gekennzeichnet**, daß die Mobilstation zusätzliche Informationen, die in einer vom Mobilfunknetz unabhängigen Quelle bereitgestellt werden, empfängt und in Abhängigkeit vom Inhalt dieser Informationen die genannten Messages zu einem bestimmten Zeitpunkt derart beeinflusst, daß das Mobilfunknetz aufgrund dieser Messages ein Handover in die von der Mobilstation gewünschte Funkzelle entscheiden kann.

2. Verfahren gemäß Anspruch 1, **dadurch gekennzeichnet,** daß die genannten zusätzlichen Informationen an die Mobilstation durch einen Ortsinformations-Generator erzeugt werden, der an einem definierten Ort der Funkzelle stationiert ist.

3. Verfahren gemäß einem der Ansprüche 1 oder 2, **dadurch gekennzeichnet**, daß die Mobilstation mit einer eigenen Datenbank zur Ausübung des Verfahrens ausgestattet ist.

4. Verfahren gemäß Anspruch 3, **dadurch gekennzeichnet,** daß in der Datenbank alle notwendigen Zellennummern des Mobilfunknetzes, das vorgegebene Datentelegramm und die Informationselemente, die zu einer Manipulation der Messages verwendet werden, gespeichert sind.

5. Verfahren gemäß einem der Ansprüche 1 bis 4, **dadurch gekennzeichnet**, daß ein in der Mobilstation befindlicher Kontroller den Message-Generator in zwei verschiedene Betriebsarten, den Normalbetrieb und den Sonderbetrieb, schalten kann.

6. Verfahren gemäß Anspruch 5, **dadurch gekennzeichnet**, daß der Message-Generator im Sonderbetrieb den Measurement-Report so manipuliert, daß nur die Wunschzelle der Mobilstation als einzig mögliche Zielzelle für ein Handover dem Mobilfunknetz angegeben wird.

7. Vorrichtung zur Durchführung eines ortsabhängigen Handover in einem Mobilfunknetz, welches aus einer Vielzahl von Funkfeststationen besteht, die eine Vielzahl von Funkzellen (4, 5) versorgen, wobei in dem Mobilfunknetz Mobilstationen (3) mittels einer Funkverbindung mit einer der jeweiligen Funkzelle (4, 5) zugeordneten Funkfeststation verbunden sind, **dadurch gekennzeichnet**, daß in einem definierten Abstand von einer statischen und definierten Zellgrenze (B) sich ein Ortsinformations-Generator (A) befindet, und daß der Ortsinformations-Generator (A) Ortsinformationen an die passierende Mobilstation (3) sendet.

## Claims

1. Method for carrying out location-dependent handover in a mobile radio network which comprises a plurality of mobile base stations which service a plurality of radio cells, mobile stations in the mobile radio network being connected by means of a radio link to a mobile base station assigned to the respective radio cell, measurements of reception parameters being carried out in the mobile station during the radio link and the measured values being transmitted to the mobile radio network in the form of messages and the radio link being changed from one radio cell to another when specific values of the parameters are reached, characterized in that the mobile station receives additional information which is made available in a source which is independent of the mobile radio network, and a said mobile station influences the aforesaid messages at a specific time as a function of the content of this information in such a way that the mobile radio network can decide, on the basis of these messages, to form a handover to the radio cell requested by the mobile station.

2. Method according to Claim 1, characterized in that the aforesaid additional information to the mobile station is generated by means of a local-information generator which is stationed at a defined location in the radio cell.

3. Method according to one of Claims 1 or 2, characterized in that the mobile station is equipped with its own database for carrying out the method.

4. Method according to Claim 3, characterized in that all the necessary cell numbers of the mobile radio network, the prescribed data telegram and the information elements which are used for manipulating the messages are stored in the database.

5. Method according to one of Claims 1 to 4, characterized in that a controller which is located in the mobile station can switch the message generator into two different modes of operation, the normal mode and the special mode.

6. Method according to Claim 5, characterized in that, in the special mode, the message generator manipulates the measurement report in such a way that only the desired cell of the mobile station is specified to the mobile radio network as the single possible target cell for a handover.

7. Device for carrying out a location-dependent handover in a mobile radio network which comprises a plurality of mobile base stations which service a plurality of radio cells (4, 5), mobile stations (3) in the mobile radio network being connected by means of a radio link to a mobile base station which is assigned to the respective radio cell (4, 5), characterized in that a local-information generator (A) is located at a defined distance from a static and defined cell boundary (B), and in that the local-information generator (A) transmits local information to the passing mobile station (3).

## Revendications

1. Procédé pour l'exécution d'un changement de poste en fonction du lieu dans un réseau radiotéléphonique mobile, qui est constitué d'une pluralité de postes radio fixes, qui alimentent une pluralité de cellules radio, dans lequel des postes mobiles du réseau radiotéléphonique mobile sont raccordés, au moyen d'une liaison radio, à un poste radio fixe affecté à la cellule radio respective, dans lequel, au cours de la liaison radio, on effectue dans le poste mobile des mesures de paramètres de réception, on transmet les valeurs de mesure sous la forme de messages au réseau radiotéléphonique mobile et, lorsque des valeurs déterminées des paramètres sont atteintes, on effectue un changement de la liaison radio d'une cellule radio à une autre, caractérisé en ce que le poste mobile reçoit des informations supplémentaires qui ont été préparées dans une source indépendante du réseau radiotéléphonique mobile et agit, en fonction du contenu de ces informations, sur les messages mentionnés à un moment déterminé de telle sorte que le réseau radiotéléphonique mobile puisse, en raison de ces messages, décider d'un changement de poste dans la cellule radio souhaitée par le poste mobile.

2. Procédé selon la revendication 1, caractérisé en ce que les informations supplémentaires mentionnées sont produites dans le poste mobile par un générateur d'informations de lieu qui est stationné dans un lieu défini de la cellule radio.

3. Procédé selon l'une quelconque des revendications 1 et 2, caractérisé en ce que le poste mobile est équipé d'une banque de données propre pour l'exécution du procédé.

4. Procédé selon la revendication 3, caractérisé en ce que tous les numéros de cellules nécessaires du réseau radiotéléphonique mobile, le télégramme de données prédéterminé et les éléments d'information, qui sont utilisés pour la manipulation des messages, sont stockés dans la banque de données.

5. Procédé selon l'une quelconque des revendications 1 à 4, caractérisé en ce qu'un dispositif de contrôle qui se trouve dans le poste mobile peut commuter le générateur de messages dans deux types d'exploitation différents, l'exploitation normale et l'exploitation spéciale.

6. Procédé selon la revendication 5, caractérisé en ce que le générateur de messages manipule, en exploitation spéciale, le rapport de mesure de telle sorte que seule la cellule souhaitée du poste mobile soit indiquée au réseau radiotéléphonique mobile comme unique cellule cible possible pour un changement de poste.

7. Dispositif pour réaliser un changement de poste en fonction du lieu dans un réseau radiotéléphonique mobile, qui est constitué d'une pluralité de postes radio fixes, qui alimentent une pluralité de cellules radio (4, 5), dans lequel des postes mobiles (3) du réseau radiotéléphonique mobile sont raccordés, au moyen d'une liaison radio, à un poste radio fixe affecté à la cellule radio respective (4, 5), caractérisé en ce qu'un générateur d'informations de lieu (A) se trouve à une distance définie d'une limite de cellule (B) statique et définie et en ce que le générateur d'informations de lieu (A) envoie des informations de lieu au poste mobile (3) qui passe à sa portée.
